# EUROPÄISCHE PATENTANMELDUNG

(11) **EP 2 281 527 A1**
(43) Veröffentlichungstag der Anmeldung: **09.02.2011**
(21) Anmeldenummer: 09009673.6
(22) Anmeldetag: 27.07.2009
(51) Int. Cl.: A61C 8/00

(54) **Adapter zum Übertragen eines Drehmoments auf den Aufbauteil eines Dentalimplantats**

(71) Anmelder: Straumann Holding AG, 4002 Basel (CH)
(72) Erfinder: Günter, Daniel, CH-4002 Basel (CH); Bugnard, Guillaume, CH-4002 Basel (CH); Bernhard, Nicolai, Somerville, MA 02144 (US); Lussi, Jost, CH-4002 Basel (CH); Courvoisier, Stephane, CH-4002 Basel (CH)
(74) Vertreter: Fraefel, Christoph

(57) **Zusammenfassung**

Die Erfindung betrifft einen Adapter (10, 110) zum Übertragen eines Drehmoments von einem Eindrehwerkzeug auf einen Aufbauteil eines Dentalimplantats, insbesondere zum Eindrehen des Dentalimplantats in einen Knochen oder des Aufbauteils in einen Verankerungsteil. Der Adapter (10, 110) weist einen Kopfabschnitt (20, 120), der mit dem Eindrehwerkzeug zusammenwirken kann, und einen Aufnahmeabschnitt (40, 140) auf. Der Aufnahmeabschnitt (40, 140) ist mit dem Aufbauteil des Dentalimplantats lösbar verbindbar. Der Adapter (10, 110) weist mindestens eine Schwächungszone (32, 50, 132) auf und verformt sich oberhalb eines vorgegebenen Drehmoments T_{deform} im Bereich der Schwächungszone (32, 50, 132).

## Beschreibung

Die vorliegende Erfindung betrifft einen Adapter zum Übertragen eines Drehmoments von einem Eindrehwerkzeug auf den Aufbauteil eines Dentalimplantats gemäss dem Oberbegriff des Anspruchs 1.

Die Verwendung von Dentalimplantaten als künstlichen Ersatz für Zahnwurzeln hat sich in den letzten Jahren etabliert. Es gibt verschiedene Formen von Dentalimplantaten, wobei sich insbesondere die schraubenförmigen Implantate bewährt haben. Typischerweise werden Dentalimplantate aus Titan oder aus verschiedenen Keramiken verwendet.

Schraubenförmige Dentalimplantate bestehen üblicherweise aus einem Verankerungsteil zur Verankerung des Implantats im Knochen und einem Aufbauteil, auf dem eine Suprakonstruktion, beispielsweise eine Krone, befestigt werden kann. Wenn Verankerungsteil und Aufbauteil als ein einziges Bauteil ausgebildet sind, spricht man von einem einteiligen Implantat. Alternativ werden auch zweiteilige Implantate verwendet, bei denen Verankerungsteil und Aufbauteil als zwei separate Bauteile ausgebildet sind.

Zum Fixieren eines schraubenförmigen Dentalimplantats im Knochen wird das Implantat in ein passendes Bohrloch eingeschraubt. Am Aufbauteil des Implantats wird dann die Suprakonstruktion (Krone) befestigt.

Um das Eindrehen eines Dentalimplantats in den Knochen zu ermöglichen, weisen konventionelle Implantate im Bereich des Verankerungsteils und/oder des Aufbauteils üblicherweise ein Innengewinde zur Befestigung eines einschraubbaren Adapters auf, an dem ein Eindrehwerkzeug zum Übertragen eines Drehmoments auf das Implantat befestigt werden kann. Solche einschraubbaren Adapter sind beispielsweise aus EP 1 038 506, WO 2008/071368 oder EP 0 811 358 bekannt. Alternativ kann ein entsprechend geformter Adapter auch auf den Aufbauteil aufgesteckt und beispielsweise mittels Formschluss mit diesem verbunden werden. Zum Eindrehen wird auf den auf das Implantat aufgesteckten oder im Innengewinde des Implantats verankerten Adapter ein Drehmoment ausgeübt, beispielsweise mit Hilfe einer Ratsche. Anschliessend wird der Adapter wieder vom Dentalimplantat gelöst.

Beim Eindrehen besteht das Risiko, dass ein zu grosses Drehmoment auf das Dentalimplantat übertragen wird und damit eine zu grosse Kraft auf den Aufbauteil oder den Knochen ausgeübt wird, was zu Knochenresorption führen kann. Insbesondere wenn ein auf das Implantat aufgesteckter Adapter verwendet wird, besteht das Risiko, dass auf dem Implantat Spuren vom Adapter zurückbleiben oder dass das Implantat gar beschädigt wird. Allfällige Adapter-Spuren auf dem Aufbauteil sind nicht nur unschön, sondern können auch zu einer verminderten Haftung der Suprakonstruktion am Aufbauteil führen. Das Implantat kann sowohl innerlich, zum Beispiel durch Bildung von Mikrorissen, als auch äusserlich, beispielsweise durch teilweise Zerstörung einer osteointegrativen Oberfläche, beschädigt werden.

Ausserdem kann durch ein zu grosses Drehmoment auch das Knochengewebe rund um das Bohrloch beschädigt werden, in welches das Dentalimplantat eingeschraubt werden soll. Eine solche Beeinträchtigung des Knochengewebes kann zu einer verminderten Osteointegration und damit zu einer verschlechterten Verankerung des Implantats im Knochen führen.

Eine Beschädigung des Dentalimplantats oder des Knochengewebes kann dadurch verhindert werden, dass zum Übertragen des Drehmoments auf den Adapter ein sogenannter Drehmomentschlüssel verwendet wird, bei dem sich ein maximal übertragbares Drehmoment einstellen lässt. Dabei wird ein Adapter auf das Implantat aufgesteckt oder im Innengewinde des Implantats verankert und dann mithilfe eines Drehmomentschlüssels, der als Ratsche wirkt, ein Drehmoment auf den mit dem Aufbauteil des Implantats verbundenen Adapter ausgeübt. Um die Unversehrtheit von Implantat und Knochengewebe zu garantieren, ist es zwingend notwendig, einen speziellen Drehmomentschlüssel zu benutzen, dessen maximales Drehmoment auf das verwendete Implantat abgestimmt ist.

Drehmomentschlüssel sind verhältnismässig teuer. Ausserdem ist es notwendig, dass der Anwender das maximale Drehmoment je nach Material auf das verwendete Implantat abstimmt. Drehmomentschlüssel sind zudem drehsinnabhängig, d.h. wenn sie verkehrt montiert oder verwendet werden, ist die Drehmomentbegrenzung nicht gegeben.

Es ist eine Aufgabe der vorliegenden Erfindung, einen einfach herstellbaren und leicht handhabbaren Adapter zum Übertragen eines Drehmoments auf den Aufbauteil eines Dentalimplantats zur Verfügung zu stellen, mit Hilfe dessen - unabhängig von der Wahl des Eindrehwerkzeugs und vom Drehsinn - sichergestellt wird, dass das Implantat oder das umliegende Knochengewebe nicht beschädigt wird. Diese Aufgabe wird gelöst durch den Adapter gemäss Anspruch 1. Bevorzugte Ausführungsformen sind Gegenstand der abhängigen Ansprüche.

Die vorliegende Erfindung betrifft einen Adapter zum Übertragen eines Drehmoments von einem Eindrehwerkzeug auf einen Aufbauteil eines Dentalimplantats. Die Übertragung des Drehmoments auf den Aufbauteil dient entweder zum Eindrehen des einen schraubenförmigen Verankerungsteil aufweisenden Dentalimplantats in einen Knochen oder zum Einschrauben des Aufbauteils in einen Verankerungsteil. Der Adapter weist entlang einer mittig angeordneten Längsachse einen Kopfabschnitt und einen starr damit verbundenen Aufnahmeabschnitt auf. Der Kopfabschnitt ist derart ausgebildet, dass er mit dem Eindrehwerkzeug zum Übertragen des Drehmoments zusammenwirken kann. Der Aufnahmeabschnitt weist eine mantelförmige Wandung auf, die eine sacklochförmige Ausnehmung zur Aufnahme des Aufbauteils des Dentalimplantats begrenzt, über die der Aufnahmeabschnitt mit dem Aufbauteil des Dentalimplantats durch Formschluss lösbar verbunden werden kann. Der erfindungsgemässe Adapter ist **dadurch gekennzeichnet, dass** er mindestens eine Schwächungszone aufweist und dass er sich im Bereich der Schwächungszone oberhalb eines vorgegebenen Drehmoments T_{deform} verformt. Vorzugsweise verformt sich der Adapter oberhalb des vorgegebenen Drehmoments T_{deform} plastisch und/oder elastisch.

Der erfindungsgemässe Adapter ist derart ausgebildet, dass er auf dem Aufbauteil eines Dentalimplantats aufgesteckt werden kann und nach dem Eindrehen des Dentalimplantats in einen Knochen - oder des Aufbauteils in einen Verankerungsteil - problemlos wieder vom Aufbauteil gelöst werden kann. Der Adapter eignet sich sowohl für einteilige als auch für zweiteilige Dentalimplantate, und kann insbesondere dazu verwendet werden, ein ein- oder zweiteiliges Dentalimplantat in den Knochen einzudrehen.

Der Kopfabschnitt des Adapters ist derart ausgebildet, dass mit einem Eindrehwerkzeug ein Drehmoment auf den Adapter und damit auf den damit verbundenen Aufbauteil des Dentalimplantats übertragen werden kann. Als Eindrehwerkzeug kann beispielsweise eine Ratsche verwendet werden. Alternativ kann auch mittels eines Schraubenschlüssels oder eines Drehmomentschlüssels ein Drehmoment auf den Adapter übertragen werden. Ein Drehmomentschlüssel zeigt das nominelle Drehmoment an und erlaubt so eine zusätzliche Überprüfung durch den Anwender, während der Adapter gemäss der vorliegenden Erfindung die Drehmomentbegrenzung sicherstellt.

Die mindestens eine Schwächungszone des erfindungsgemässen Adapters führt dazu, dass er sich oberhalb eines vorgegebenen Drehmoments T_{deform} verformt, insbesondere plastisch und/oder elastisch. Unterhalb des vorgegebenen Drehmoments ist der Adapter stabil. Erst oberhalb des vorgegebenen Drehmoments T_{deform} beginnt der Adapter, sich zu verformen. Dadurch erkennt der Anwender, dass ein zu hohes Drehmoment aufgewendet wird und dass die Drehmoment-Übertragung zu stoppen ist. Vorzugsweise ist die Schwächungszone derart ausgestaltet, dass der Adapter bei (fortgesetzter) überhöhter Drehmoment-Übertragung in diesem Bereich bricht. Auf diese Weise wird wirksam verhindert, dass das Dentalimplantat und/oder das umliegende Knochengewebe beim Eindrehen des Dentalimplantats beschädigt werden.

Eine erfindungsgemässe Verformung des Adapters ist insbesondere auch dann gegeben, wenn der Adapter bricht. In einer bevorzugten Ausführungsform besteht der Adapter mindestens teilweise aus einem keramischen oder brüchigen Material, so dass er bei der Übertragung eines zu hohen Drehmoments im Bereich der Schwächungszone bricht.

Die mindestens eine Schwächungszone des Adapters kann beliebig gross sein. Eine solche Schwächungszone kann beispielsweise als Schlitz oder Kerbe in der mantelförmigen Wandung des Ausnahmeabschnitts ausgebildet sein. Alternativ ist es auch möglich, den erfindungsgemässen Adapter mit einer Schwächungszone in einem Bereich zwischen dem Kopfabschnitt und dem Aufnahmeabschnitt auszubilden.

Die Verwendung eines erfindungsgemässen Adapters zum Übertragen eines Drehmoments von einem Eindrehwerkzeug auf den Aufbauteil eines Dentalimplantats ermöglicht es, unabhängig von der Wahl des Eindrehwerkzeugs, eine Beschädigung des Implantats oder des umliegenden Knochengewebes beim Eindrehen zu verhindern. Gleichzeitig wird aber garantiert, dass ein genügend grosses Drehmoment auf den Aufbauteil übertragen wird, so dass das Dentalimplantat ausreichend fest im Knochen, bzw. der Aufbauteil genügend fest im Verankerungsteil, verankert wird. Der Adapter ist ausserdem drehsinnunabhängig, kann also, im Gegensatz zu einem Drehmomentschlüssel, für beide Drehrichtungen eingesetzt werden und stellt dabei eine Drehmomentbegrenzung sicher.

Bei Verwendung des erfindungsgemässen Adapters kann auf einen Drehmomentschlüssel verzichtet werden: Beim Eindrehen erkennt der Anwender aufgrund der Verformung des Adapters sofort, dass ein zu hohes Drehmoment eingesetzt wird und kann eine Beschädigung des Dentalimplantats oder des Knochengewebes verhindern. Zudem ist die Schwächungszone vorzugsweise derart ausgestaltet, dass der Adapter bei fortgesetzter überhöhter Drehmoment-Übertragung bricht und die Drehmoment-Übertragung auf diese Weise gestoppt wird. Es ist aber durchaus denkbar, dass zusätzlich zum erfindungsgemässen Adapter ein Drehmomentschlüssel eingesetzt wird, der dem Anwender während der Anwendung zusätzlich das aktuelle nominelle Drehmoment anzeigt.

In einer bevorzugten Ausführungsform weist der Adapter zusätzlich einen Halsabschnitt auf, der den Kopfabschnitt mit dem Aufnahmeabschnitt verbindet. Dieser ist vorzugsweise schmaler als der Kopf- und Aufnahmeabschnitt ausgebildet.

In einer weiteren bevorzugten Ausführungsform verläuft die mindestens eine Schwächungszone des Adapters mindestens abschnittsweise in radialer Richtung um den Adapter. Vorzugsweise umläuft eine solche radiale Schwächungszone den Adapter vollständig. Alternativ oder auch zusätzlich zu einer solchen radial verlaufenden Schwächungszone ist es auch möglich, dass die Schwächungszone im Wesentlichen parallel zur Längsachse des Adapters verläuft.

In einer weiteren bevorzugten Ausführungsform ist die mindestens eine Schwächungszone als Kerbe im Halsabschnitt des Adapters ausgebildet. Eine derartige Anordnung der Schwächungszone ist insbesondere dazu geeignet, die Übertragung eines zu hohen Drehmoments "automatisch" zu stoppen: Der Adapter bricht an dieser Stelle, sobald ein vorgegebenes maximales Drehmoment überschritten wird, und die weitere Drehmoment-Übertragung wird verhindert.

In einer bevorzugten Ausführungsform ist die mindestens eine Schwächungszone als Kerbe in der mantelförmigen Wandung des Aufnahmeabschnitts ausgebildet. Alternativ oder zusätzlich dazu kann die mindestens eine Schwächungszone auch als Schlitz an der Innen- oder Aussenseite der mantelförmigen Wandung des Aufnahmeabschnitts ausgebildet sein. Eine solche als Kerbe oder Schlitz ausgebildete Schwächungszone weitet sich auf, wenn das vorgegebene Drehmoment T_{deform} überschritten wird, insbesondere in einem Endbereich des Schlitzes. Es ist auch denkbar, mehrere Kerben und/oder Schlitze miteinander zu kombinieren, insbesondere eine in radialer Richtung um den Adapter verlaufende Schwächungszone mit einer parallel zur Längsachse des Adapters verlaufenden Schwächungszone in form einer Kerbe oder eines Schlitzes.

Geeignete Werte für T_{deform} sind grundsätzlich abhängig von Material, Form und Durchmesser des Aufbauteils und des Dentalimplantats, das eingedreht werden soll. Ein Fachmann auf dem Gebiet der Dentalimplantologie kann diese Werte ohne grösseren experimentellen Aufwand leicht bestimmen.

In einer bevorzugten Ausführungsform ist T_{deform} grösser als 35 Ncm, vorzugsweise grösser als 80 Ncm, insbesondere grösser als 90 Ncm. Durch die Wahl eines geeigneten minimalen Werts von T_{deform} wird sichergestellt, dass das Dentalimplantat beim Eindrehen genügend fest im Knochen, respektive der Aufbauteil genügend fest im Verankerungsteil, verankert wird.

In einer bevorzugten Ausführungsform ist T_{deform} kleiner als 150 Ncm, vorzugsweise kleiner als 130 Ncm, insbesondere kleiner als 110 Ncm. Durch die Wahl eines geeigneten maximalen Drehmoments wird garantiert, dass das Dentalimplantat und das umliegende Knochengewebe beim Eindrehen nicht beschädigt werden.

In einer bevorzugten Ausführungsform weist der Kopfabschnitt im Wesentlichen die Form eines polygonalen Zylinders mit mehreren, parallel zur Längsachse verlaufenden Kanten oder andere formschlüssige Verbindungen, wie z. B. Torx, auf. Insbesondere weist der Kopfabschnitt im Wesentlichen die Form eines hexagonalen oder oktagonalen Zylinders auf. Eine solche Ausbildung des Kopfabschnitts erlaubt es, ein Eindrehwerkzeug wie eine Ratsche, einen gewöhnlichen Schraubenschlüssel oder einen Drehmomentschlüssel mit dem Kopfabschnitt zu verbinden und ein Drehmoment auf den Adapter zu übertragen. Alternativ ist es auch möglich, dass der Kopfabschnitt einen Innensechskant, Innenachtkant oder eine andere, nach innen ausgebildete formschlüssige Verbindung, z. B. einen Innen-Torx aufweist, welche mit einem Eindrehwerkzeug zusammenwirken kann.

Bei einer bevorzugten Ausführungsform des erfindungsgemässen Adapters ist die sacklochförmige Ausnehmung im Wesentlichen kegelstumpfförmig und verjüngt sich gegen den Kopfbereich hin. Alternativ kann die sacklochförmige Ausnehmung auch im Wesentlichen zylindrisch oder gestuft zylindrisch ausgestaltet sein. Eine solche Form ist optimal auf die heutzutage übliche Form von Aufbauteilen von Dentalimplantaten abgestimmt.

Vorzugsweise weist die sacklochförmige Ausnehmung mindestens eine Anschlagfläche zum Übertragen des Drehmoments vom Adapter auf den Aufbauteil auf, die mit je einer entsprechenden Gegenfläche des Aufbauteils eine bis mindestens zum Drehmoment T_{deform} drehsichere Verbindung bildet. Eine solche Anschlagfläche gewährleistet, dass beim Drehen des Adapters der Aufbauteil in seinem Innern mitgedreht wird. Wird das vorgegebene Drehmoment T_{deform} überschritten, so löst sich vorzugsweise diese drehsichere Verbindung.

In einer bevorzugten Ausführungsform besteht der erfindungsgemässe Adapter aus Metall, wie z. B. rostfreiem Stahl, Titan oder einer Titanlegierung, oder aus anderen biokompatiblen Werkstoffen, wie Polymeren, faserverstärkten Polymeren oder Keramiken. Der Adapter kann zusätzlich mit einer Hartschicht, z. B. Titannitrid, Zirkonnitrid oder Chromnitrid versehen sein. Diese Materialien erlauben eine einfach Herstellung und Sterilisation und gewährleisten die Biokompatibilität des Adapters.

Vorzugsweise ist der Adapter einstückig ausgebildet. Alternativ ist es aber auch möglich, den erfindungsgemässen Adapter zwei- oder mehrstückig auszubilden. So kann beispielsweise nur der Aufnahmeabschnitt aus einer Keramik ausgebildet sein, während der Kopf- und Halsabschnitt aus einem Metall gefertigt sind. Alternativ kann aber auch der Aufnahmeabschnitt mit einer Keramik beschichtet sein. Vorzugsweise ist der Aufnahmeabschnitt aus demselben Material gefertigt oder damit beschichtet, wie der Aufbauteil des Dentalimplantats, der darin aufgenommen werden soll, insbesondere aus derselben Keramik, so dass der Adapter keinerlei Spuren auf dem Aufbauteil hinterlässt.

Im Weiteren betrifft die vorliegende Erfindung ebenfalls die Verwendung des erfindungsgemässen Adapters zum Übertragen eines Drehmoments auf einen keramischen Aufbauteil eines Dentalimplantats. Dabei treten die oben beschriebenen Vorteile des Adapters ganz besonders in den Vordergrund: Keramische Aufbauteile und Dentalimplantate sind in der Regel weiss oder sehr hell, so dass allfällig Spuren des Adapters besonders gut sichtbar wären. Ausserdem brechen keramische Implantate verhältnismässig leicht unter Beanspruchung. Der erfindungsgemässe Adapter ist aber auch vorzüglich dazu geeignet, Dentalimplantate aus Metal einzudrehen. Er kann sowohl für einteilige als auch für zweiteilige Dentalimplantate verwendet werden.

vorzugsweise wird das mit dem erfindungsgemässen Adapter verbundene Dentalimplantat durch eine Bohrschablone, insbesondere in Kombination mit einer Bohrhülse, in einen Knochen eingedreht. Zu diesem Zweck ist der erfindungsgemässe Adapter vorzugsweise derart ausgestaltet, dass er nicht nur durch die Bohrschablone und/oder die Bohrhülse hindurch verwendet werden kann, sondern gleichzeitig von dieser geführt wird. Auf diese Weise kann durch die Bohrschablone und/oder die Bohrhülse die Orientierung des mit dem Implantat verbundenen Adapters festgelegt werden, so dass das Implantat genau in der Achse des Bohrlochs eingedreht wird.

In einer bevorzugten Ausführungsform wird der erfindungsgemässe Adapter auch dazu verwendet, das Dentalimplantat aus dessen Verpackung zu entnehmen. Implantate sind für Transport und Lagerung, üblicherweise einzeln, steril verpackt und werden erst kurz vor dem Eindrehen in einen Knochen aus dieser Verpackung entnommen. Um eine Kontaminierung des sterilen Implantats zu verhindern, wird das Implantat vorzugsweise mithilfe des erfindungsgemässen Adapters aus der Verpackung entnommen. Zu diesem Zweck wird der Aufbauteil des Dentalimplantats noch in der Verpackung mit dem Adapter verbunden, indem letzterer auf den Aufbauteil aufgesteckt wird, und dann das Implantat zusammen mit dem Adapter entnommen.

Vorzugsweise weist der erfindungsgemässe Adapter eine Markierung auf, die die Lage der Anschlagfläche in der sacklochförmigen Ausnehmung anzeigt, so dass die Anschlagfläche direkt mit der entsprechenden Gegenfläche des Aufbauteils des Dentalimplantats in Verbindung gebracht werden kann. Eine solche Markierung kann beispielsweise als Punkt oder Strich in einer von der Farbe des Adapters unterscheidbaren Farbe ausgestaltet sein. Alternativ kann auch die Schwächungszone, insbesondere wenn diese als Schlitz ausgestaltet ist, als Markierung dienen. Es ist ausserdem denkbar, dass das Dentalimplantat oder seine Verpackung ebenfalls eine Orientierungshilfe aufweist, gegenüber welcher die Markierung am Adapter beim Aufstecken ausgerichtet werden soll. Eine solche Orientierungshilfe kann beispielsweise als farblich verschiedener Punkt oder Strich ausgestaltet sein. Alternativ wäre auch ein Vorsprung oder eine Vertiefung in der Verpackung denkbar. Besonders bevorzugt ist es, dass die Verpackung einen Vorsprung in Längsrichtung des Dentalimplantats aufweist, der mit der als Schlitz oder als eine in Längsrichtung des Adapters eingebrachte Aussparung ausgestalteten Schwächungszone des Adapters zusammenwirken kann und diesen führt.

Es zeigt:
- Fig. 1: eine schematische Darstellung einer ersten einstückigen Ausführungsform eines erfindungsgemässen Adapters;
- Fig. 2: eine Schrägansicht des Adapters aus Fig. 1;
- Fig. 3: eine schematische Darstellung einer zweiten einstückigen Ausführungsform eines erfindungsgemässen Adapters;
- Fig. 4: eine schematische Darstellung einer dritten einstückigen Ausführungsform eines erfindungsgemässen Adapters;
- Fig. 5: eine schematische Darstellung einer vierten einstückigen Ausführungsform eines erfindungsgemässen Adapters;
- Fig. 6: eine schematische Darstellung einer fünften einstückigen Ausführungsform eines erfindungsgemässen Adapters;
- Fig. 7: eine schematische Darstellung einer zweistückigen Ausführungsform eines erfindungsgemässen Adapters;
- Fig. 8: den Verbindungsteil des Adapters aus Fig. 7;
- Fig. 9: den Befestigungsteil des Adapters aus Fig. 7.

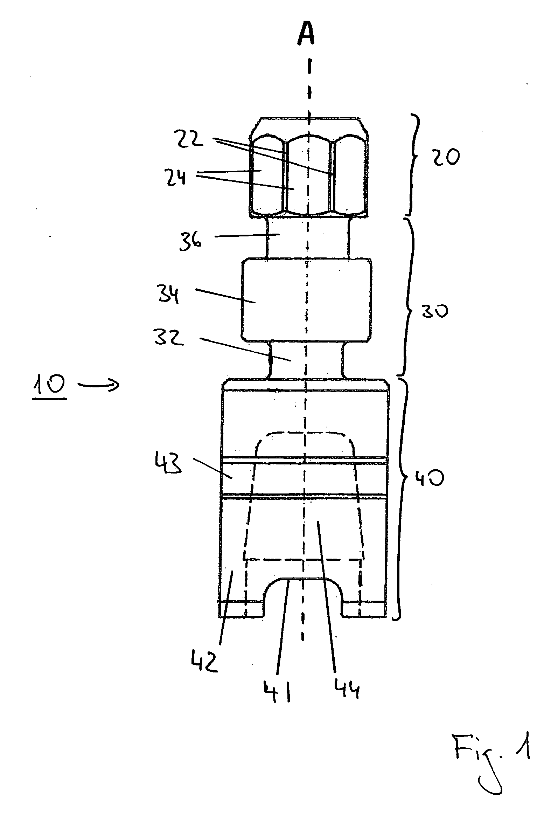

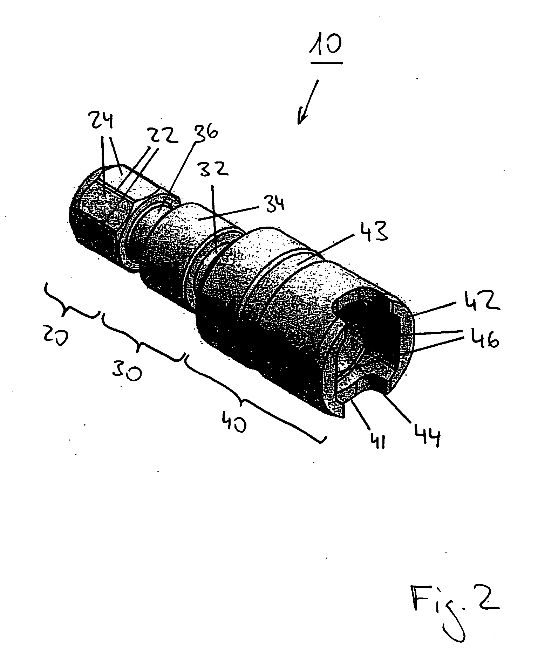

Der in den Figuren 1 und 2 gezeigte Adapter 10 zum Übertragen eines Drehmoments von einem Eindrehwerkzeug auf den Aufbauteil eines Dentalimplantats ist einstückig aus rostfreiem Stahl oder einem der anderen, oben erwähnten biokompatiblen Materialien gefertigt. Der Adapter 10 weist entlang einer mittig angeordneten Längsachse A einen Kopfabschnitt 20, einen Halsabschnitt 30 und einen Aufnahmeabschnitt 40 auf, die starr miteinander verbundenen sind.

Der Kopfabschnitt 20 ist als hexagonaler Zylinder ausgebildet, wobei sechs parallel zur Längsachse verlaufenden Kanten 22 sechs Zylinderflächen 24 in radialer Richtung begrenzen. Aufgrund dieser Form kann zur Drehmomentübertragung ein Eindrehwerkzeug mit einem entsprechenden Innensechskant formschlüssig auf den Kopfabschnitt 20 aufgesetzt werden. Alternativ wären auch andere formschlüssige Verbindungen, wie ein Torx oder ein Achtkant, denkbar.

Der Aufnahmeabschnitt 40 weist eine mantelförmige Wandung 42 auf, die eine sacklochförmige Ausnehmung 44 zur Aufnahme des Aufbauteils des Dentalimplantats begrenzt, über die der Aufnahmeabschnitt 40 des Adapters 10 mit dem Aufbauteil des Dentalimplantats durch Formschluss lösbar verbindbar ist. In der mantelförmigen Wandung 42 weist der gezeigte Adapter eine radial umlaufende Rille 43 auf, sowie zwei auf der dem Kopfbereich 20 abgewandten Seite angeordnete Ausnehmungen 41.

Die sacklochförmige Ausnehmung 44 ist im Wesentlichen kegelstumpfförmig und verjüngt sich gegen den Kopfbereich 20 hin. Alternativ könnte die sacklochförmige Ausnehmung 44 auch zylindrisch oder gestuft zylindrisch ausgebildet sein. Die sacklochförmige Ausnehmung 44 weist zwei Anschlagflächen 46 auf zum Übertragen des Drehmoments vom Adapter 10 auf den Aufbauteil des Dentalimplantats, die mit je einer entsprechenden Gegenfläche des Aufbauteils eine bis mindestens zum Drehmoment T_{deform} drehsichere Verbindung bilden.

Der in den Figuren 1 und 2 gezeigte Adapter 10 weist im Bereich des Halsabschnitts 30 eine im Wesentlichen kreiszylinderförmige Schwächungszone 32 auf, die als Kerbe ausgebildet ist und den Adapter 10 in radialer Richtung umläuft. Wird bei der Drehmomentübertragung vom erfindungsgemässen Adapter 10 auf ein Dentalimplantat ein vorgegebenes Drehmoment T_{deform} überschritten, so verformt sich der Adapter 10 im Bereich der Schwächungszone 32 plastisch und/oder elastisch. Ausserdem weist der Adapter 10 im Halsabschnitt 30 einen im Wesentlichen kreiszylinderförmigen, breiten Bereich 34 sowie einen ebenfalls im Wesentlichen kreiszylinderförmigen, schmaleren Bereich 36 auf, wobei der breite Bereich 34 zwischen der Schwächungszone 32 und dem schmaleren Bereich 36 angeordnet ist. Die Schwächungszone 32 ist dem Aufnahmeabschnitt 40 zugewandt und der schmalere Bereich 36 dem Kopfabschnitt 20.

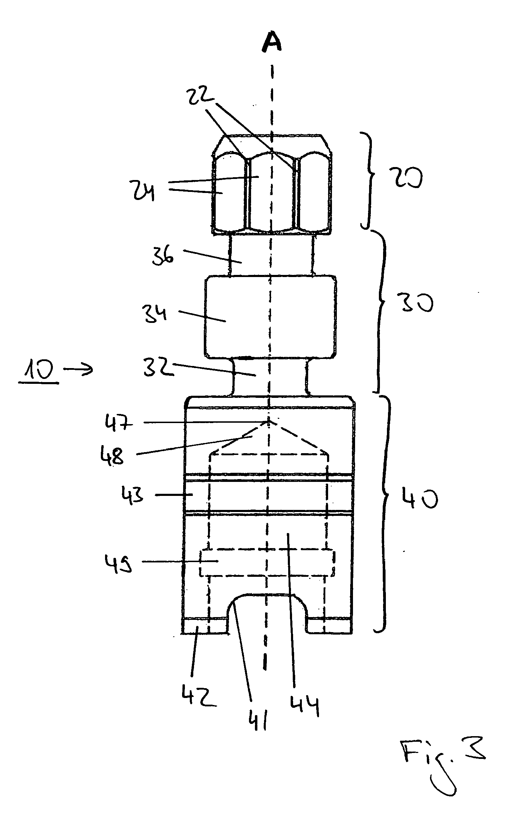

Figur 3 zeigt eine weitere Ausführungsform eines einstückigen erfindungsgemässen Adapters 10, welche sich von der in den Figuren 1 und 2 gezeigten durch die Form der sacklochförmigen Ausnehmung 44 unterscheidet. Diese ist in Figur 3 im Wesentlichen kreiszylinderförmig ausgestaltet und weist an ihrem dem Kopfabschnitt 20 zugewandten Ende 47 einen kegelförmigen Abschnitt 48 auf. Ausserdem weist die sacklochförmige Ausnehmung 44 eine die

Innenseite der mantelförmigen Wandung 42 des Aufnahmeabschnitts 40 radial umlaufende Kerbe 49 auf.

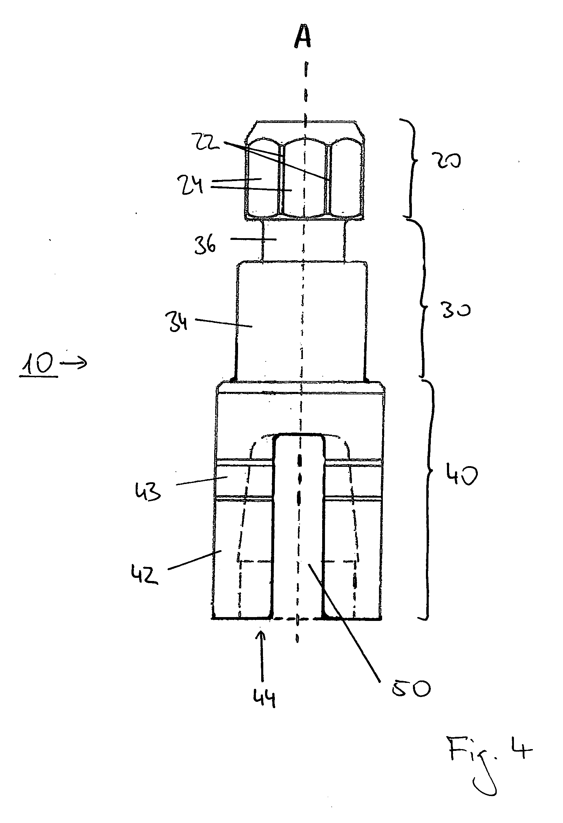

Der in Figur 4 gezeigte, einstückige erfindungsgemässe Adapter 10 weist ebenfalls entlang der mittig angeordneten Längsachse A einen Kopfabschnitt 20, einen Halsabschnitt 30 und einen Aufnahmeabschnitt 40 auf, die starr miteinander verbundenen sind. In dieser dritten Ausführungsform ist die Schwächungszone jedoch als Schlitz 50 in der mantelförmigen Wandung 42 des Aufnahmeabschnitts ausgebildet. Dieser verläuft im Wesentlichen parallel zur Längsachse A.

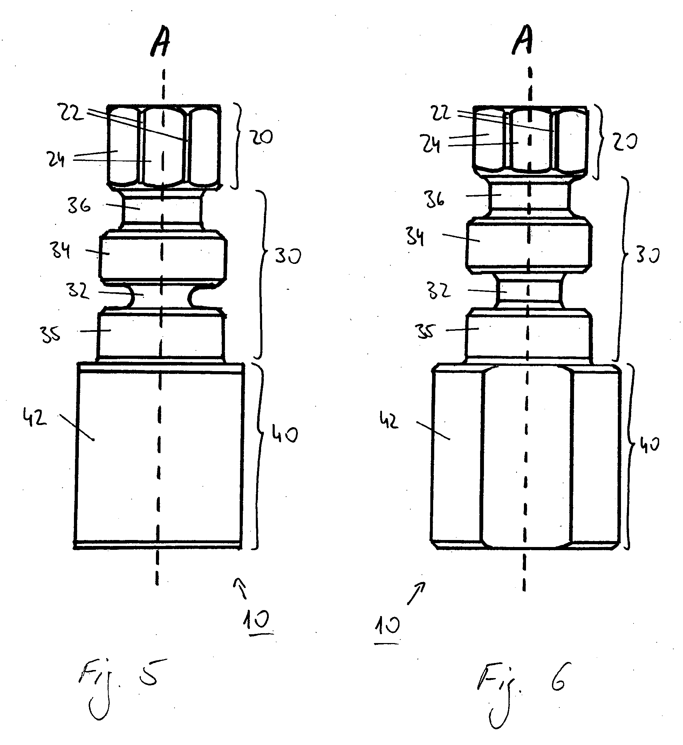

Figuren 5 und 6 zeigen zwei weitere Ausführungsformen des einstückigen Adapters 10. Sie unterscheiden sich von denjenigen aus den Figuren 1, 3 und 4 insbesondere durch die Gestaltung von Kopfabschnitt 20, Halsabschnitt 30 und Aufnahmeabschnitt 40. So variiert bei den verschiedenen Ausführungsformen die (relative) Höhe des Kopfabschnitts 20, die Ausgestaltung des Halsabschnitts 30 und die Form der mandelförmigen Wandung 42 des Aufnahmeabschnitts 40. Die in den Figuren 5 und 6 gezeigten Adapter 10 weisen beispielsweise beide nebst der Schwächungszone 32, dem breiten Bereich 34 und dem schmalen Bereich 36 einen zweiten breiten Bereich 35 auf. Zudem ist die Schwächungszone 32 beim in Figur 5 gezeigten Adapter 10 schmaler und weniger hoch ausgestaltet als bei den anderen Ausführungsformen. Es hat sich gezeigt, dass diese in Figur 5 gezeigte Form der Schwächungszone 32 eine optimale Konzentrierung der auf den Adapter 10 wirkenden Kräfte während des Eindrehens erlaubt, so dass er bei der Anwendung eines zu hohen Drehmoments in einem möglichst eng begrenzten Bereich in der Schwächungszone 32 und möglichst rechtwinklig zur Längsachse A bricht.

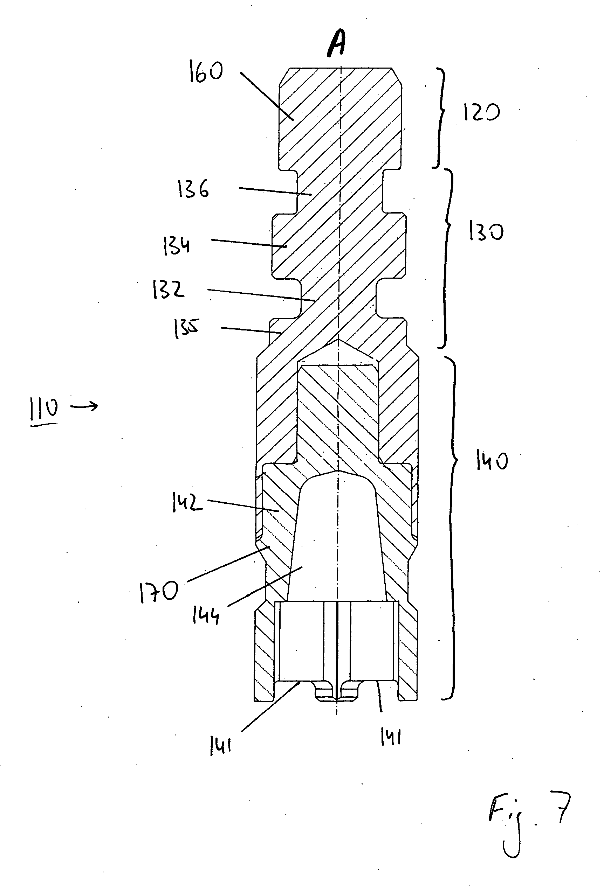

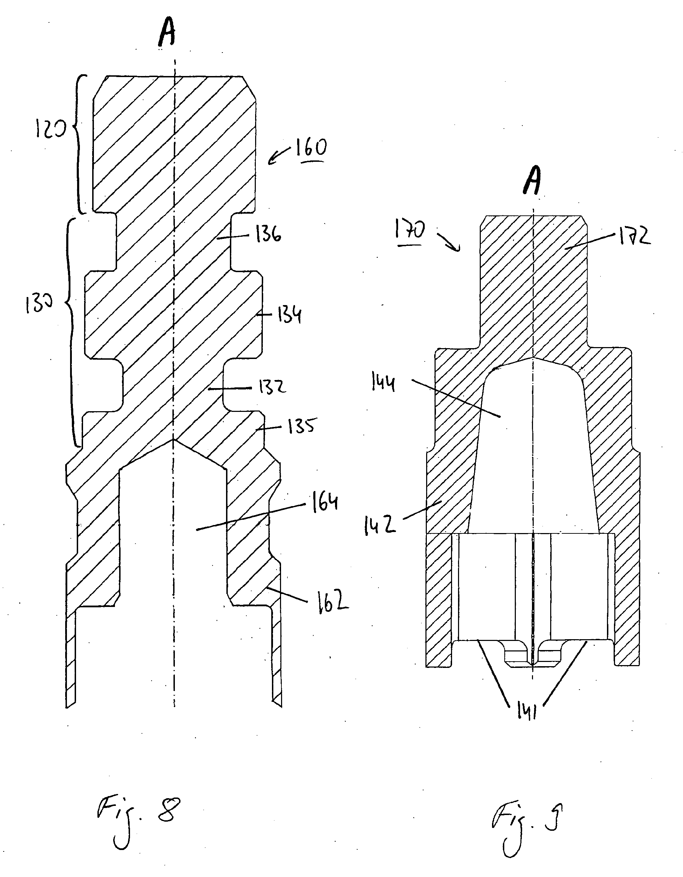

Figur 7 zeigt einen Längsschnitt durch eine zweistückige Ausführungsform eines erfindungsgemässen Adapters 110. Der Adapter weist im montierten Zustand ebenfalls entlang einer mittig angeordneten Längsachse A einen Kopfabschnitt 120, einen Halsabschnitt 130 und einen Aufnahmeabschnitt 140 auf. Der Adapter 110 setzt sich aus einem Verbindungsteil 160 aus rostfreiem Stahl, welcher in Figur 8 ebenfalls im Längsschnitt separat gezeigt ist, und einem Befestigungsteil 170 aus einer Keramik zusammen, welcher in Figur 9 ebenfalls im Längsschnitt separat gezeigt ist.

Der Kopfabschnitt 120, der Halsabschnitt 130 mit einer Schwächungszone 132, einem ersten breiten Bereich 134, einem zweiten breiten Bereich 135 und einem schmalen Bereich 136 und ein Teil des Aufnahmeabschnitts 140 sind dem Verbindungsteil 160 zugeordnet. Wie insbesondere aus Figur 8 ersichtlich ist, weist der Verbindungsteil 160 an seinem vom Kopfabschnitt 120 abgewandten Ende eine Verbindungsausnehmung 164 auf, die dazu bestimmt ist, einen Befestigungsvorsprung 172 (siehe Figur 9) des Befestigungsteils 170 aufzunehmen und von einem Verbindungsmantel 162 umgeben ist.

Der Befestigungsteil 170 bildet den Rest des Aufnahmeabschnitts 140 und weist eine sacklochförmige Ausnehmung 144 zur Aufnahme des Aufbauteils des Dentalimplantats auf, welche von einer mantelförmigen Wandung 142 umgeben ist. Auf der im montierten Zustand dem Kopfbereich 120 abgewandten Seite weist der Befestigungsteil 170 Ausnehmungen 141 auf. Der Befestigungsteil 170 umfasst zudem den Befestigungsvorsprung 172, der zum Montieren des Adapters 110 in die Verbindungsausnehmung 164 des Verbindungsteils 160 eingeführt wird und fest mit diesem verbindbar ist. Zum Übertragen eines Drehmoments auf den Aufbauteil eines Dentalimplantats wird zunächst der Verbindungsteil 160 mit dem Befestigungsteil 170 verbunden und anschliessend der Aufbauteil in die sacklochförmige Ausnehmung 144 eingeführt. Dadurch, dass der Verbindungsteil 160 aus einer Keramik gefertigt ist, hinterlässt der erfindungsgemässe Adapter 110 keine Spuren auf dem Aufbauteil des Implantats.

## Patentansprüche

1. Adapter (10, 110) zum Übertragen eines Drehmoments von einem Eindrehwerkzeug auf einen Aufbauteil eines Dentalimplantats, wobei der Adapter (10, 110) entlang einer mittig angeordneten Längsachse A einen Kopfabschnitt (20, 120) und einen starr damit verbundenen Aufnahmeabschnitt (40, 140) aufweist, wobei der Kopfabschnitt (20, 120) derart ausgebildet ist, dass er mit dem Eindrehwerkzeug zusammenwirken kann, und der Aufnahmeabschnitt (40, 140) eine mantelförmige Wandung (42, 142) aufweist, die eine sacklochförmige Ausnehmung (44, 144) zur Aufnahme des Aufbauteils des Dentalimplantats begrenzt, über die der Aufnahmeabschnitt (40, 140) mit dem Aufbauteil des Dentalimplantats durch Formschluss lösbar verbindbar ist,
**dadurch gekennzeichnet, dass**
der Adapter (10, 110) mindestens eine Schwächungszone (32, 50, 132) aufweist und dass sich der Adapter (10, 110) im Bereich der Schwächungszone (32, 50, 132) oberhalb eines vorgegebenen Drehmoments T_{deform} verformt.

2. Adapter (10, 110) gemäss Anspruch 1, **dadurch gekennzeichnet, dass** sich der Adapter (10, 110) im Bereich der Schwächungszone (32, 50, 132) oberhalb des vorgegebenen Drehmoments T_{deform} plastisch und/oder elastisch verformt.

3. Adapter (10, 110) gemäss Anspruch 1 oder 2, **dadurch gekennzeichnet, dass** er einen Halsabschnitt (30, 130) aufweist, der den Kopfabschnitt (20, 120) mit dem Aufnahmeabschnitt (40, 132) verbindet.

4. Adapter (10, 110) gemäss einem der Ansprüche 1 bis 3, **dadurch gekennzeichnet, dass** die mindestens eine Schwächungszone (32, 50, 132) mindestens abschnittweise in radialer Richtung um den Adapter (10, 110) verläuft.

5. Adapter (10, 110) gemäss Anspruch 4, **dadurch gekennzeichnet, dass** die mindestens eine Schwächungszone (32, 50, 132) den Adapter (10, 110) radial umläuft.

6. Adapter (10, 110) gemäss einem der Ansprüche 1 bis 5, **dadurch gekennzeichnet, dass** die mindestens eine Schwächungszone (32, 50, 132) im Wesentlichen parallel zur Längsachse A des Adapters (10, 110) verläuft.

7. Adapter (10, 110) gemäss einem der Ansprüche 1 bis 6, **dadurch gekennzeichnet, dass** die mindestens eine Schwächungszone (32, 50, 132) als Kerbe (32, 132) im Halsabschnitt (30, 130) ausgebildet ist.

8. Adapter (10, 110) gemäss einem der Ansprüche 1 bis 7, **dadurch gekennzeichnet, dass** die mindestens eine Schwächungszone (32, 50, 132) als Kerbe an der Innen- oder Aussenseite der mantelförmigen Wandung (42, 142) des Aufnahmeabschnitts (40, 140) ausgebildet ist.

9. Adapter (10, 110) gemäss einem der Ansprüche 1 bis 4 oder 6, **dadurch gekennzeichnet, dass** die mindestens eine Schwächungszone (32, 50, 132) als Schlitz (50) in der mantelförmigen Wandung (42, 142) des Aufnahmeabschnitts (40, 140) ausgebildet ist.

10. Adapter (10, 110) gemäss einem der Ansprüche 1 bis 9, **dadurch gekennzeichnet, dass** T_{deform} grösser ist als 35 Ncm, vorzugsweise grösser als 80 Ncm, insbesondere grösser als 90 Ncm.

11. Adapter (10, 110) gemäss einem der Ansprüche 1 bis 10, **dadurch gekennzeichnet, dass** T_{deform} kleiner ist als 150 Ncm, vorzugsweise kleiner als 130 Ncm, insbesondere kleiner als 110 Ncm.

12. Adapter (10, 110) gemäss einem der Ansprüche 1 bis 11, **dadurch gekennzeichnet, dass** der Kopfabschnitt (20, 120) im Wesentlichen die Form eines polygonalen Zylinders mit mehreren, parallel zur Längsachse A verlaufenden Kanten (22) aufweist.

13. Adapter (10, 110) gemäss Anspruch 12, **dadurch gekennzeichnet, dass** der Kopfabschnitt (20, 120) im Wesentlichen die Form eines hexagonalen oder oktagonalen Zylinders aufweist.

14. Adapter (10, 110) gemäss einem der Ansprüche 1 bis 13, **dadurch gekennzeichnet, dass** die sacklochförmige Ausnehmung (44, 144) im Wesentlichen kegelstumpfförmig ist und sich gegen den Kopfbereich (20, 120) hin verjüngt.

15. Adapter (10, 110) gemäss einem der Ansprüche 1 bis 14, **dadurch gekennzeichnet, dass** die sacklochförmige Ausnehmung (44, 144) mindestens eine Anschlagfläche (46) zum Übertragen des Drehmoments vom Adapter (10, 110) auf den Aufbauteil aufweist, die mit je einer entsprechenden Gegenfläche des Aufbauteils eine bis mindestens zum Drehmoment T_{deform} drehsichere Verbindung bildet.

16. Adapter (10, 110) gemäss einem der Ansprüche 1 bis 15, **dadurch gekennzeichnet, dass** der Adapter (10, 110) aus Metall, insbesondere aus rostfreiem Stahl, besteht.

17. Verwendung des Adapters (10, 110) gemäss einem der Ansprüche 1 bis 16 zum Übertragen eines Drehmoments auf einen keramischen Aufbauteil eines Dentalimplantats.
